**Europäisches Patentamt**

**European Patent Office**

**Office européen des brevets**

(11) Publication number : **0 367 629 B1**

# EUROPEAN PATENT SPECIFICATION

(45) Date of publication of patent specification :
21.10.92 Bulletin 92/43

(51) Int. Cl.⁵ : **C08L 27/18, H01B 3/44, H01B 7/36**

(21) Application number : **89311432.2**

(22) Date of filing : **03.11.89**

(54) **Fluorocarbon polymer compositions and articles, especially electric cables, with markings on a surface thereof.**

(30) Priority : **04.11.88 GB 8825860**

(43) Date of publication of application :
**09.05.90 Bulletin 90/19**

(45) Publication of the grant of the patent :
**21.10.92 Bulletin 92/43**

(84) Designated Contracting States :
**AT BE CH DE ES FR GB GR IT LI LU NL SE**

(56) References cited :
**EP-A- 0 199 991**
**PATENT ABSTRACTS OF JAPAN, vol. 10, no.**
**185 (C-357)[2241], 27th June 1986**
**PATENT ABSTRACTS OF JAPAN, vol. 12, no.**
**365 (C-532)[3212], 29th September 1988**

(73) Proprietor : **BICC Public Limited Company**
**Devonshire House Mayfair Place**
**London W1X 5FH (GB)**

(72) Inventor : **Coxon, Eric**
**34 Gorsey Croft Eccleston Park**
**Prescot Merseyside L34 2RT (GB)**

(74) Representative : **Poole, Michael John et al**
**BICC plc Patents and Licensing Department**
**Quantum House Maylands Avenue**
**Hemel Hempstead, Herts. HP2 4SJ (GB)**

## Description

This invention relates to articles, more especially but not exclusively electric cables, in which fluorocarbon compositions are used and in which markings are applied to a surface of such a composition.

Polymers that are completely fluorinated, or nearly so, such as polytetrafluoro ethylene (PTFE), fluorinated ethylene-propylene copolymer (FEP) and the polymer sold under the trade mark "DuPont" as DuPont PFA are valued for high temperature rating, chemical inertness and good electrical properties; but their inert surfaces do not easily accept durable markings with inks or paints and laser printers tend to be ineffectual; in some cases the laser beam may pass through the polymer without absorption, and in others material may be ablated from the surface without any visible mark resulting; certain lasers working in the ultra-violet region do produce marks, but they are pale grey and not clearly visible.

We have discovered that certain fluorocarbon polymer compositions (not wholly new per se, see for example EP-A-0199991) accept clearly visible laser printed markings without significant detriment to temperature rating or to physical or electrical properties.

The invention provides an article, especially an electric cable, having markings upon a surface thereof, wherein the surface is made of a composition comprising 0.5-15% (by weight of total polymer) of a conjugated aromatic polymer dispersed as light-scattering particles in a matrix of a substantially fully fluorinated polymer and the markings are formed by laser printing.

Preferably the content of the aromatic polymer in the composition is in the range 1-10% and more especially 1-5%; contents above 10% may lead to reduced toughness, besides being more expensive, while contents below about 1% may have less than ideal contrast. However, the precise content is not at all critical to the appearance of the markings, within the range defined.

Pigments may be present (in conventional amounts) but a good white is easily achieved without any pigments whatsoever and the use of white pigment by itself appears to have no advantages. Other minor additives can be used, if required.

Suitable conjugated aromatic polymers currently available include polyketones, polyetherketones (especially the one sold by Imperial Chemical Industries plc as PEEK®), polysulphones, polyethersulphones, polyimides, polyphenylene sulphides, polyetherimides and certain liquid crystal polymers.

Infra-red, visible and ultra-violet lasers are all expected to give good results.

Examples

A series of screened 2-core aircraft cables were jacketed with the compositions shown in Table 1 below. In each case the ingredients were dried and tumble-mixed before supply to the hopper of a conventional thermoplastic-fluorocarbon extruder. The cables were marked using a YAG laser operating at 1064 nm with a beam power of about 5 W; in all cases clearly visible black markings were produced.

TABLE 1

| Ingredient Example: | 1 | 2 | 3 | 4 | 5 | 6 |
|---|---|---|---|---|---|---|
| Plain clear FEP | 9 | 9 | 9 | 9 | 9 | 9 |
| White pigmented FEP commercial masterbatch | | | 1 | | | |
| Red pigmented FEP commercial masterbatch | | | | 1 | 3 | |
| Plain clear PEEK | 1 | | 0.5 | 0.5 | 1.5 | |
| White pigmented PEEK commercial masterbatch | | 1 | | | | |
| Red pigmented PEEK commercial masterbatch | | | | | | 1 |
| Colour | ----White----- | | | -----Pink----- | | |
| Remarks | A | | | | B | C |

A    barely distinguishable in appearance from Examples 2 & 3, perhaps even whiter

B    darker than Example 4, but still clearly legible

C    dark pink, legible but not as easily.

A series of wires were similarly coated with the compositions detailed in Tables 2 and 3. These were marked using a single pulse of radiation from a 248mm krypton fluoride excimer U.V. laser. In all cases markings clearly legible under a hand lens were obtained.

## TABLE 2

| Ingredient                                            Example: | 7 | 8 | 9 | 10 | 11 | 12 | 13 |
|---|---|---|---|---|---|---|---|
| Plain clear FEP | 9.7 | 9.5 | 9.3 | 9.7 | 9.5 | 9.3 | 9.5 |
| Polyether Sulphone (ICI grade 4800P) | 0.3 | 0.5 | 0.7 | | | | |
| Polyether Ketone (ICI grade 220G) | | | | 0.3 | 0.5 | 0.7 | |
| Polyphenylene Sulphide (Hoechst Celanese Fortran W205) | | | | | | | 0.5 |
| Colour | --------- White------------ | | | | | | |
| Remarks | | | | | | | |

TABLE 3

| Ingredient                          Example: | 14 | 15 | 16 | 17 | 18 | 19 | 20 |
|---|---|---|---|---|---|---|---|
| Plain clear FEP | 9.9 | 9.5 | 9.7 | 9.5 | 9.7 | 9.5 | 9.3 |
| Polysulphone (Amoco P1700) | 0.1 | 0.5 | | | | | |
| Polyetherimide (GE Plastics Ultem) | | | 0.3 | 0.5 | | | |
| Liquid Crystal Polymer (ICI Victrex SRP) | | | | | 0.3 | 0.5 | 0.7 |
| Colour | --------- White----------- | | | | | | |
| Remarks | D | G | | E | | | F / G |

D    Slightly translucent, but still clearly legible.

E    Slightly paler mark than Example 16.

F    Slightly paler mark than Example 19.

G    These samples tended to split or crack: a lower content of the aromatic polymer is recommended.

## Claims

1. An article, especially an electric cable, having markings upon a surface thereof wherein the surface is made of a polymer composition comprising 0.5-15% (by weight of total polymer) of a conjugated aromatic polymer dispersed as light-scattering particles in a matrix of a substantially fully fluorinated polymer and the markings are formed by laser printing.

2. An article as claimed in Claim 1 in which the said polymer composition is white but contains no pigment.

3. An article as claimed in claim 1 or claim 2 in which the content of the said aromatic polymer in the composition is 1-10%.

4. An article as claimed in claim 1 or claim 2 in which the content of the said aromatic polymer in the composition is 1-5%.

## Patentansprüche

1. Artikel, insbesondere elektrisches Kabel mit Markierungen auf ihrer Oberfläche, wobei die Oberfläche aus einer Polymerzusammensetzung hergestellt ist, die 0,5 bis 15 % (bezogen auf das Gewicht des Gesamtpolymers) eines konjugierten aromatischen Polymers aufweist, das als lichtstreuende Teilchen in einer Matrix eines im wesentlichen vollständig fluorierten Polymers dispergiert ist, und wobei die Markierungen durch Laserdruck gebildet sind.

2. Artikel nach Anspruch 1, wobei die Polymerzusammensetzung weiß ist, jedoch kein Pigment enthält.

3. Artikel nach Anspruch 1 oder 2, wobei der Anteil des aromatischen Polymers in der Zusammensetzung von 1 bis 10 % beträgt.

4. Artikel nach Anspruch 1 oder 2, wobei der Anteil des aromatischen Polymers in der Zusammensetzung von 1 bis 5 % beträgt.

## Revendications

1. Article, en particulier câble électrique, présentant des marques sur sa surface, dont la surface est constituée d'une composition de polymère renfermant 0,5 à 15 % (en poids par rapport au polymère total) d'un polymère aromatique conjugué, dispersé, sous forme de particules diffusant la lumière, dans une matrice formée par un polymère pratiquement complètement fluoré, et pour lequel les marques sont formées par impression au laser.

2. Article selon la revendication 1, pour lequel ladite composition de polymère est blanche, mais ne contient pas de piquent.

3. Article selon la revendication 1 ou 2, pour lequel la teneur en ledit polymère aromatique de la composition est de 1 à 10 %.

4. Article selon la revendication 1 ou 2, pour lequel la teneur en ledit polymère aromatique de la composition est de 1 à 5 %.